# EUROPÄISCHE PATENTANMELDUNG

(11) **EP 0 695 659 A2**
(43) Veröffentlichungstag der Anmeldung: **07.02.1996**
(21) Anmeldenummer: 95110621.0
(22) Anmeldetag: 07.07.1995
(51) Int. Cl.: B60J 3/02

(54) **Sonnenblende**

(30) Priorität: 05.08.1994 DE 9412656 U
(71) Anmelder: Utescheny - Endos GmbH, D-75059 Zaisenhausen (DE)
(72) Erfinder: Utescheny, Ralf, D-75059 Zaisenhausen (DE)
(74) Vertreter: Clemens, Gerhard, Dr.-Ing.

(57) **Zusammenfassung**

Eine Sonnenblende (10) für ein Fahrzeug mit einer am Fahrzeug befestigbaren Halteeinheit (12) und einer an der Halteeinheit (12) angeordneten Blendschutzeinheit (14), die bevorzugt zwischen Fahrer- und Beifahrer-Sonnenblende angeordnet ist und die zu Zwecken des Lichtschutzes umklappbar ist, zeichnet sich dadurch aus, daß die Blendschutzeinheit (14) einteilig als im wesentlichen geschlossene, zumindest bereichsweise vorhandene Hohlprofileinheit ausgebildet ist.

## Beschreibung

### TECHNISCHES GEBIET

Die vorliegende Erfindung betrifft eine Sonnenblende für einen Innenspiegel eines Fahrzeug mit einer am Fahrzeug befestigbaren Halteeinheit und einer an der Halteeinheit angeordneten Blendschutzeinheit, die im wesentlichen dazu dient, die Lücke zwischen Fahrer- und Beifahrer-Sonnenblende und oberhalb des Innenspiegels gegen Blendeinflüsse zu schließen. Derartige Sonnenblenden werden in hoher Stückzahl im Automobilbau eingesetzt. Sie sollen einerseits wirtschaftlich herstellbar sein und andererseits eine dauerhafte und zuverlässige Funktion und eine einfache Montage gewährleisten.

Die Sonnenblende wird üblicherweise zwischen der Fahrer- und Beifahrersonnenblende über dem Innenspiegel positioniert und soll dort als Lichtschutz fungieren, sobald irgendwelche Blendeinflüsse in diesem Bereich auf den Fahrer einwirken. Hierzu wird die Sonnenblende bevorzugt manuell betätigt.

### STAND DER TECHNIK

Bekannte Sonnenblenden bestehen aus zwei Halbschalen, die beim Herstellen der Sonnenblende entweder ultraschallgeschweißt werden oder aneinander geklipst werden. Dies bedeutet einen erhöhten Herstellaufwand, da zwei Bauteile verarbeitet werden müssen. Darüberhinaus ist eine Außenzier-Nut bzw. ein Schweißwulst sichtbar, was in vielen Fällen aus optischen Gründen nicht gewünscht wird.

Bei einer weiteren bekannten Ausführungsform einer Sonnenblende besteht die Flächenkontur aus einem geschäumten PP- oder PU-Kunststoffkörper, in den ein sogenannter Kunststoffeinleger aus Stabilitätsgründen eingelegt ist, der auch die Drehachse bildet, an die die Halteeinrichtung angeschlossen ist. Insgesamt wird der geschäumte Kunststoffkörper mit seinem Kunststoffeinleger mit Folie umschweißt. Neben einem aufwendigen Herstellvorgang weist eine derartige Sonnenblende Festigkeitseigenschaften auf, die nicht im optimalen Bereich liegen.

### DARSTELLUNG DER ERFINDUNG

Der vorliegenden Erfindung liegt, ausgehend von dem genannten Stand der Technik, die Aufgabe bzw. das technische Problem zugrunde, eine verbesserte Sonnenblende anzugeben, die eine wirtschaftliche Herstellung ermöglicht und eine dauerhafte und zuverlässige Funktion neben einer einfachen Montage ermöglicht.

Die erfindungsgemäße Sonnenblende ist durch die Merkmale des unabhängigen Anspruchs 1 gegeben. Vorteilhafte Ausgestaltung und Weiterbildungen sind Gegenstand der abhängigen Ansprüche.

Die erfindungsgemäße Sonnenblende zeichnet sich demgemäß dadurch aus, daß die Blendschutzeinheit einteilig als im wesentlichen geschlossene, zumindest bereichsweise vorhandene Hohlprofileinheit ausgebildet ist. Bevorzugt ist hierbei die Blendschutzeinheit so ausgebildet, daß die Hohlprofileinheit sich im wesentlichen über die gesamte Flächenkontur erstreckt. Eine besonders bevorzugte Ausgestaltung der erfindungsgemäßen Sonnenblende, die eine äußerst wirtschaftliche Herstellung gewährleistet, zeichnet sich dadurch aus, daß die Sonnenblende aus thermoplastischem Kunststoff besteht und nach dem Gas-Innen-Druck (GID)-Verfahren hergestellt ist. Hierbei wird über einen Injektor ein Gas in das Innere eines Kunststoffkörpers gepresst, so daß ein Hohlraum entsteht und dabei die Form ausgeformt wird.

Die erfindungsgemäße Sonnenblende hat gegenüber den herkömmlichen Sonnenblenden den Vorteil, daß sie infolge ihrer Einteiligkeit eine besonders hohe Formstabilität aufgrund vergrößerter Biege- und Torsionssteifigkeit aufweist, niedrige Fertigungskosten gewährleistet, da keine aufwendigen Montagearbeiten zum Zusammensetzen mehrerer Teile bzw. Verbinden mehrerer Teile notwendig ist, die bei den zweischaligen bekannten Sonnenblenden vorhandene störende Ziernut entfallen kann und darüberhinaus die Prozeßsicherheit in der Fertigung erhöht ist, da lediglich ein Teil gefertigt werden muß, wodurch sich insgesamt ein geringerer Ausschuß erzielen läßt, was sich insgesamt positiv auf eine wirtschaftliche Herstellung auswirkt.

Eine konstruktiv besonders einfache Ausgestaltung der erfindungsgemäßen Sonnenblende zeichnet sich dadurch aus, daß an die Blendschutzeinheit eine Achse angeformt, an der die Halteeinheit drehbar gelagert ist. Hierbei kann bevorzugt ein zwischen der Halteeinheit und der Blendeinheit wirkendes Federelement vorhanden sein, das die Blendschutzeinheit in einer definierten Anfangs- bzw. Endlage hält. Die Einstellung der Anfangs- bzw. Endlage erfolgt im Bedarfsfall bevorzugt manuell.

Eine besonders bevorzugte Ausführungsform der erfindungsgemäßen Sonnenblende zeichnet sich dadurch aus, daß das Innere des Hohlprofils mit einer zweiten Materialart, insbesondere Kunststoff, ausgefüllt ist. Die zweite Materialart kann hierbei aus Recyclat oder Papp-Polymerisat oder dergleichen bestehen. Dadurch ist eine wirtschaftliche Herstellung hinsichtlich der Materialkosten möglich, da an den Stellen, an denen das Kunststoffmaterial nicht sichtbar ist, "minderwertiges" Material eingesetzt werden kann.

Als Herstellungsverfahren für die erfindungsgemäße Sonnenblende mit den zwei thermoplastischen Kunststoffmaterialien wird das Sandwich-Spritzgießverfahren, insbesondere das Mono-Sandwich-Verfahren eingesetzt. Bei dem Mono-Sandwich-Verfahren werden zwei unterschiedliche Kunststoffschmelzen in einen Spritzzylinder hintereinander geschichtet und in einem anschließenden Einspritzschritt zwangsläufig nacheinander in ein Werkzeug eingespritzt. Begünstigt unter anderem auch durch die Zähigkeit der Schmelzen kommt es im Einspritzzylinder zu keinen Vermischungen der Schmelzungen untereinander. Das Mono-Sandwich-Verfahren ist beschrieben in "Jaroschek, C., Das Mono-Sandwich-Verfahren: Neuer Weg zur Verarbeitung von Regeneraten", PLAST VERARBEITER 44, Juli 1993, Seite 14 bis 17.

Weitere Ausführungsformen und Vorteile der Erfindung ergeben sich durch die in den Ansprüchen ferner aufgeführten Merkmale sowie durch die nachstehend angegebenen Ausführungsbeispiele. Die Merkmale der Ansprüche können in beliebiger Weise miteinander kombiniert werden, insoweit sie sich nicht offensichtlich gegenseitig ausschließen.

### KURZE BESCHREIBUNG DER ZEICHNUNG

Die Erfindung sowie vorteilhafte Ausführungsformen und Weiterbildungen derselben werden im folgenden anhand des in der Zeichnung dargestellten Beispiels näher beschrieben und erläutert. Die der Beschreibung und der Zeichnung zu entnehmenden Merkmale können einzeln für sich oder zu mehreren in beliebiger Kombination erfindungsgemäß angewandt werden. Es zeigen:
- Fig. 1: schematische Perspektive einer Sonnenblende mit einer als Hohlkörper nach dem GID-Verfahren hergestellten Blendschutzeinheit und einer Halteeinheit,
- Fig. 2: schematischer Schnitt entlang der Linie 2-2 gemäß Fig. 1 ohne Halteeinheit,
- Fig. 3: schematischer Schnitt gemäß der Linie 3 gemäß Fig. 1 ohne Halteeinheit und
- Fig. 4: schematischer Schnitt durch eine nach dem Sandwich-Spritzgießverfahren hergestellten Sonnenblende.

### WEGE ZUM AUSFÜHREN DER ERFINDUNG

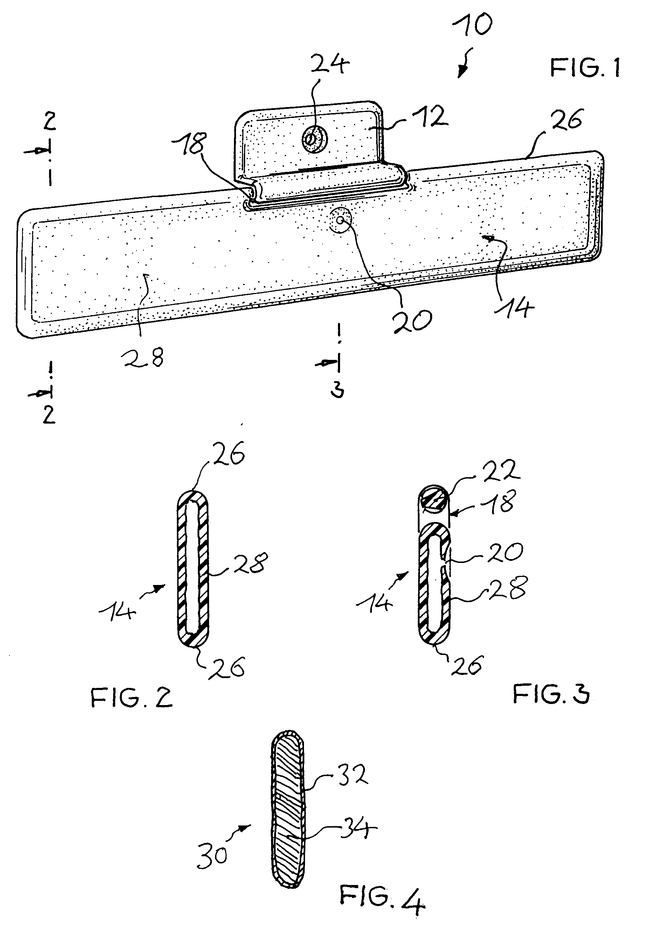

Die in Fig. 1 dargestellte Sonnenblende 10 weist eine Blendschutzeinheit 14 und eine Halteeinheit 12 auf. Die Blendschutzeinheit 14 ist im wesentlichen als langes schmales Rechteck konturmäßig vorhanden, wobei die Blendschutzeinheit 14 im wesentlichen über ihre gesamte Fläche als geschlossene Hohlprofileinheit mit einer Wandung 28 ausgebildet ist. Im Inneren der Blend-schutzeinheit 14 ist somit ein Hohlraum vorhanden. Hergestellt wird diese Blendschutzeinheit 14 nach dem Gas-Innen-Druck (GID)-Verfahren, bei dem über einen GID-Injektor in eine Öffnung 20 innerhalb der Form ein Gas eingedrückt wird, so daß im Inneren des in der Form befindlichen erwärmten thermoplastischen Kunststoffmaterials sich ein Hohlkörper ausbilden kann. Gleichzeitig erfolgt mit dem Eindrücken des Gases die Ausbildung der äußeren Form der Blendschutzeinheit 14. Nähere Einzelheiten zu dem Gas-Innen-Druck-Verfahren sind beispielsweise in der EP-A 0 545 028 beschrieben.

Im oberen mittleren Bereich der Blendschutzeinheit 14 weist der Hohlprofilkörper einen Rücksprung 18 auf, innerhalb dessen eine Achse 22 außenbündig mit der Blendschutzeinheit 14 vorhanden ist, welche Achse 22 als Drehachse für die Halteeinheit 12 dient.

Die Halteeinheit 12 ist drehbar an der Drehachse 22 angeschlossen und im übrigen als im wesentlichen L-förmiges Element ausgebildet. An dem freien Schenkel des L-förmigen Querschnitts ist eine Ausnehmung 24 vorhanden, durch die hindurch ein Befestigungsmittel zum Befestigen der Sonnenblende im Bereich über dem Innenspiegel eingebracht werden kann.

Zwischen der Halteeinheit 12 und der Blendschutzeinheit 14 ist ein nicht näher dargestelltes Federelement vorhanden, das die Blendschutzeinheit in vorgebbaren Nutzungspositionen hält.

Die in den Figuren dargestellte Ausführungsform der erfindungsgemäßen Sonnenblende weist eine Blendschutzeinheit auf, deren Außenkante 26 eine Ausrundung aufweist, was ein optisch ansprechendes äußeres Erscheinungsbild gewährleistet.

Die Sonnenblende ist insgesamt so oberhalb des Innenspiegels angeordnet, daß durch einfaches Umklappen der Blendschutzeinheit 14 um ihre Drehachse 22 im Bedarfsfall Blendeinflüsse auf den Fahrer infolge blendender Lichteinwirkung auf den Bereich zwischen Fahrer- und Beifahrer-Sonnenblende zuverlässig verhindert werden. Im nicht benötigten Zustand wird die Blendschutzeinheit in einfacher Art und Weise nach oben geklappt.

Der in Fig. 4 schematisch dargestellte Schnitt durch eine Sonnenblende 30 zeigt einen Aufbau, der durch das sogenannte Mono-Sandwich-Spritzgießverfahren hergestellt ist. Der "Hohlraum" ist hierbei durch eine zweite Materialart 34 ausgefüllt, der von einer Außenhülle 32 aus einer ersten Materialart umgeben ist. Beide Materialarten sind aus thermoplatischem Kunststoff. Für die zweite Materialart wird bevorzugt ein kostengünstiges Recyclat eingesetzt. Dadurch lassen sich die Materialkosten für die Herstellung einer erfindungsgemässen Sonnenblende spürbar senken.

## Patentansprüche

1. Sonnenblende (10) für ein Fahrzeug mit
- einer am Fahrzeug befestigbaren Halteeinheit (12) und
- einer an der Halteeinheit (12) angeordneten Blendschutzeinheit (14),
-- die bevorzugt zwischen Fahrer- und Beifahrer-Sonnenblende angeordnet ist und
-- die zu Zwecken des Lichtschutzes umklappbar ist,
**dadurch gekennzeichnet**, daß
die Blendschutzeinheit (14) einteilig als im wesentlichen geschlossene, zumindest bereichsweise vorhandene Hohlprofileinheit ausgebildet ist.

2. Sonnenblende nach Anspruch 1,
**dadurch gekennzeichnet**, daß
die Blendschutzeinheit (14) im wesentlichen über die gesamte Flächenkontur als Hohlprofileinheit ausgebildet ist.

3. Sonnenblende nach Anspruch 1 und/oder 2,
**dadurch gekennzeichnet**, daß
an die Blendschutzeinheit (14) eine Achse (16) angeformt ist, an der die Halteeinheit (12) drehbar gelagert ist.

4. Sonnenblende nach zumindest einem der übrigen Ansprüche,
**dadurch gekennzeichnet**, daß
zwischen Halteeinheit und Blendschutzeinheit wirkend ein Federelement vorhanden ist.

5. Sonnenblende nach Anspruch 3 und/oder 4,
**dadurch gekennzeichnet**, daß
die Achse außenbündig mit der Blendschutzeinheit vorhanden ist.

6. Sonnenblende nach zumindest einem der übrigen Ansprüche,
**dadurch gekennzeichnet**, daß
die Blendschutzeinheit (14) zumindest bereichsweise eine gerundete Außenkante (26) aufweist.

7. Sonnenblende nach einem oder mehreren der vorstehenden Ansprüche,
**dadurch gekennzeichnet**, daß
die Sonnenblende aus thermoplastischem Kunststoff besteht und nach dem Gas-Innen-Druck (GID)-Verfahren herstellt ist.

8. Sonnenblende (30) nach einem oder mehreren der Ansprüche 1 bis 6,
**dadurch gekennzeichnet**, daß
das Innere des Hohlprofils mit einer zweiten Materialart, insbesondere Kunststoff, ausgefüllt ist.

9. Sonnenblende nach Anspruch 8,
**dadurch gekennzeichnet**, daß
die zweite Materialart aus Recyclat oder Papp-Polymerisat besteht.

10. Sonnenblende nach Anspruch 8 und/oder 9,
**dadurch gekennzeichnet**, daß
die Sonnenblende aus thermoplastischen Kunststoffmaterialien besteht und nach dem Sandwich-Spritzgießverfahren, insbesondere Mono-Sandwich-Verfahren, hergestellt ist.
